(19) Europäisches Patentamt
European Patent Office
Office européen des brevets

(11) **EP 2 104 247 A1**

(12) **EUROPEAN PATENT APPLICATION**
published in accordance with Art. 153(4) EPC

(43) Date of publication:
**23.09.2009 Bulletin 2009/39**

(51) Int Cl.:
***H04B 7/26*** *(2006.01)*     ***H04J 11/00*** *(2006.01)*

(21) Application number: **07860187.9**

(22) Date of filing: **26.12.2007**

(86) International application number:
**PCT/JP2007/074958**

(87) International publication number:
**WO 2008/084694 (17.07.2008 Gazette 2008/29)**

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **09.01.2007 JP 2007001856**

(71) Applicant: **NTT DoCoMo, Inc.
Chiyoda-ku
Tokyo 100-6150 (JP)**

(72) Inventors:
• **KISHIYAMA, Yoshihisa
Chiyoda-ku
Tokyo 100-6150 (JP)**
• **HIGUCHI, Kenichi
Chiyoda-ku
Tokyo 100-6150 (JP)**
• **SAWAHASHI, Mamoru
Chiyoda-ku
Tokyo 100-6150 (JP)**

(74) Representative: **HOFFMANN EITLE
Patent- und Rechtsanwälte
Arabellastrasse 4
81925 München (DE)**

(54) **BASE STATION DEVICE, USER DEVICE AND METHOD USED IN MOBILE COMMUNICATION SYSTEM**

(57) A base station apparatus is disclosed that is capable of communicating with user equipment used in a mobile communication system. The base station apparatus includes a determination unit determining whether a path loss value reported from the user equipment satisfies a predetermined condition, an instruction signal generation unit, based on a result of the determination made by the determination unit, generating an instruction signal indicating whether the user equipment should reduce a transmission power value in response to a request from an other cell to reduce the transmission power value, and a transmission unit transmitting the instruction signal to the user equipment. Further, the path loss value is derived based on an average receiving quality value and a target quality value.

## FIG.1

EP 2 104 247 A1

## Description

TECHNICAL FIELD

The present invention relates to a base station, user equipment, and a method used in a mobile communication system.

BACKGROUND ART

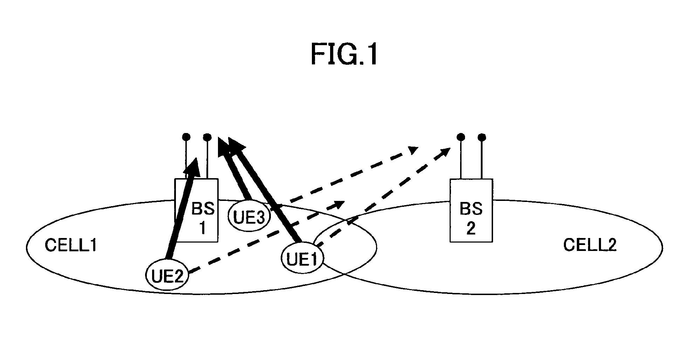

FIG. 1 schematically shows a conventional mobile communication system. The mobile communication system is the circuit-switched type system employing, for example, the W-CDMA (Wideband-Code Division Multiple Access) method. In FIG. 1, each of the user equipment (hereinafter may be referred to as user equipment terminal(s)) UE1, UE2, and UE3 is in communication with the base station apparatus (BS1) of the cell1 using a dedicated line assigned to the user equipment. The base station apparatus may be referred to as base station (BS) or NodeB. In this case, a transmission signal of a user equipment terminal may be an interference signal for any other user equipment terminals and other base stations (such as BS2 in the example of FIG.1) as well. Therefore, it is necessary to adequately control the transmission power, more particularly uplink transmission power, of the transmission signals.

In a conventional W-CDMA mobile, the transmission power is controlled using a so-called closed loop TPC (Transmitter Power Control) method (hereinafter may be simplified as TPC). In the TPC, a quality of a signal is measured at the receiver side, and by returning a transmission power control bit to the transmitter side, the transmission power of the signal to be transmitted next time is adjusted so that a predetermined quality of the signal can be received. The transmission power control bit is transmitted via a return channel called DPCCH (Dedicated Physical Control CHannel).

In the system as shown in FIG. 1, the interference received by the base station (BS2) of another cell (Cell2) is estimated (determined) by obtaining a sum of the multiple signals output from the user equipment terminals UE1, UE2, and UE3. In the circuit-switched type communications, since a dedicated line is typically provided for a longer period, the sum of the interference power from the user equipment terminals is more likely to be rather equalized due to the statistical multiplexing effect. Therefore, it is expected that the transmission power can be stably controlled when the closed loop TPC method is used.

In the next-generation mobile communication systems such as an E-UTRA (Evolved Universal Terrestrial Radio Access) system and an LTE (Long Term Evolution) system, however, it is supposed that not the "circuit-switched" type communication system but a "packet-switched" type communication system is to be provided. In the mobile communication system such as the packet-switched type communication system, in each predetermined period (e.g., per each TTI (Transmission Time Interval)), one or more resource blocks (RB) each having a predetermined bandwidth are preferentially allocated to the user equipment having better channel quality. By doing this, the transmission efficiency is expected to be improved. However, it does not always occur that the radio resources which are consecutive in time are allocated to the user equipment which is in communication with a base station. Rather, when a user equipment terminal transmits data using a time slot of a resource block, a resource block of the same frequency band may be used by another user equipment terminal. Therefore, unlike a conventional system, it is expected that the interference received by the base station of another cell may fluctuate largely as time elapses. Therefore, it may be difficult to directly apply the conventional closed loop TPC method to such next-generation mobile communication systems.

To resolve the problem, there is a known method in which the base station measures other-cell interference (the interference received from user equipment in another cell) and when the other-cell interference value exceeds a threshold value, the base station sends a request to the user equipment in the other cell to reduce the transmission power value of a signal from the user equipment (see, for example, Non Patent Document 1). This signal to request to reduce the transmission power value may be referred to as an overload indicator.

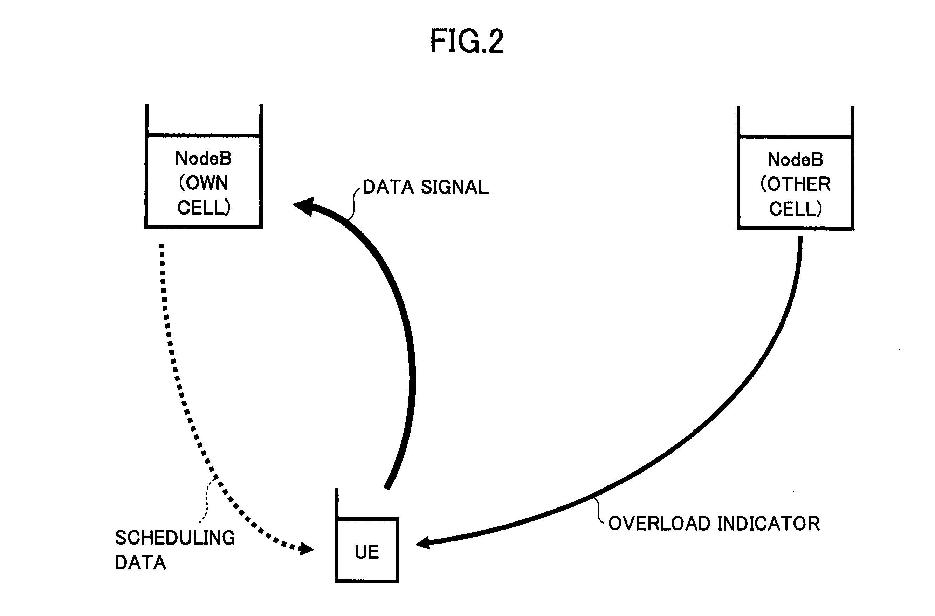

FIG. 2 schematically shows a method in which the user equipment (UE) having received an overload indicator from the NodeB (other cell) reduces the transmission power value of the data signal to be transmitted later by a predetermined value ($\Delta_{offset}$) and transmits the data signal at the reduced transmission power value to the NodeB (own cell). By doing this, it becomes possible to directly reduce the other-cell interference value.

Non Patent Document 1: 3GPP, R1-063446, November 2006

DISCLOSURE OF INVENTION

PROBLEMS TO BE SOLVED BY THE INVENTION

According to the above method, the base station having received large interference reports the overload indicator to all user equipment in the cells surrounding the base station and as a result, the transmission power values of all the user equipment terminals are reduced without exception. Even in this case, it is still observed that the interference level received by the base station largely fluctuates. Further, in the cells surrounding the base station, there may be some user equipment terminals that do not contribute to the large interference with the base station. However, in the above method, the transmission power value of such user equipment is also reduced without exception. Because of this feature, the transmission power value of extra user equipment that does not significantly contribute to causing the large interference with the base station may also be reduced and accordingly the receiving quality of the signal may be unnecesssarily (excessively)reduced, thereby reducing the throughput of the whole system.

An object of the present invention is to equalize the other-cell interference observed by the base station from the user equipment in an other cell.

MEANS FOR SOLVING THE PROBLEMS

According to an aspect of the present invention, there is provided a base station apparatus capable of communicating with user equipment used in a mobile communication system. The base station apparatus includes a determination unit determining whether a path loss value reported from the user equipment satisfies a predetermined condition, an instruction signal generation unit, based on a result of the determination made by the determination unit, generating an instruction signal indicating whether the user equipment should reduce a transmission power value in response to a request from an other cell to reduce the transmission power value, and a transmission unit transmitting the instruction signal to the user equipment. Further, the path loss value is derived based on an average receiving quality value and a target quality value.

ADVANTAGEOUS EFFECT OF THE INVENTION

Accordin to an embodiment of the present invention, it may become possible to equalize the other-cell interference observed by the base station from the user equipment in another cell.

BRIEF DESCRIPTION OF THE DRAWINGS

FIG. 1 is a drawing showing a case where a base station receives other-cell interference from user equipment in another cell;
FIG. 2 is a drawing showing a case where the user equipment (UE) having received an overload indicator reduces the transmission power value of the data signal for the transmission of the data signal;
FIG. 3 is a functional block diagram of the user equipment according to an embodiment of the present invention;
FIG. 4 is a functional block diagram of the base station according to an embodiment of the present invention;
FIG. 5 is a sequence diagram showing operations according to a first embodiment of the present invention; and
FIG. 6 is a sequence diagram showing operations according to second and third embodiments of the present invention.

EXPLANATION OF REFERENCES

302: TRANSMISSION SYMBOL GENERATION SECTION
304: DFT (DISCRETE FOURIER TRANSFORM) SECTION
306: SUBCARRIER MAPPING SECTION
308: IFFT (INVERSE FAST FOURIER TRANSFORM) SECTION
310: CYCLIC PREFIX ADDITION SECTION
312: REFERENCE SIGNAL GENERATION SECTION
314: MULTIPLEX SECTION
316: RF TRANSMISSION CIRCUIT
318: POWER AMPLIFIER
320: DUPLEXER
322,324: PATH LOSS ESTIMATION SECTION
326: OTHER-CELL IDENTIFICATION SECTION
328: OVERLOAD INDICATOR DEMODULATION SECTION
330: TRANSMISSION POWER CONTROL SECTION
402: DUPLEXER
404: RF RECEIVING CIRCUIT
406: FFT (FAST FOURIER TRANSFORM) SECTION
408: CHANNEL ESTIMATION SECTION
410: SEPARATION SECTION
412: FREQUENCY DOMAIN EQUALIZATION SECTION
414: IDFT (INVERSE DISCRETE FOURIER TRANSFORMATION) SECTION
416: DEMODULATION SECTION
420: REFERENCE SIGNAL GENERATION SECTION
422: CQI MEASUREMENT SECTION
424: SCHEDULER
426: L1/L2 CONTROL SIGNAL GENERATION SECTION
428: UE SELECTION SECTION
430: DATA SIGNAL GENERATION SECTION
432: OTHER-CELL INTERFERENCE MEASUREMENT SECTION
434: OVERLOAD INDICATOR GENERATION SECTION
436: MULTIPLEX SECTION
438: IFFT SECTION
440: CYCLIC PREFIX ADDITION SECTION
442: RF TRANSMISSION CIRCUIT
444: POWER AMPLIFIER

BEST MODE FOR CARRYING OUT THE INVENTION

According to an embodiment of the present invention, a base station determines whether a path loss value reported from user equipment satisfies a predetermined condition. Based on the determination result, an instruction signal is generated and transmitted to the user equipment, the instruction signal indicating whether the transmission power value of the user equipment is reduced in response to a request from another cell to reduce the transmission power value. By doing this, it may become possible that only the user equipment that is really required to respond to the request from the other cell can reduce the transmission power of the user equipment. As a result, it may tend to equalize the other-cell interference from the user equipment in other cells.

Whether the predetermined condition is satisfied may be determined by determining whether a difference value between an own-cell path loss value and an other-cell path loss value measured by user equipment satisfies a predetermined condition. For example, when the difference value is zero (0) or a negative value, the user equipment may respond to the request to reduce the transmission power value. By doing this, it may become possible to easily and adequately select the user equipment that should respond to the request to reduce the transmission power value.

According to an embodiment of the present invention, not only the determination whether the path loss value satisfies the predetermined condition but also the determination whether the user equipment should respond to the request from another cell to reduce the transmission power are made by the user equipment autonomously. In this case, however, a parameter value specifying the predetermined condition may be reported from the base station.

Although several preferred embodiments are separately described in the present invention, such separation of the embodiments is not essential to the present invention, and one or more embodiments may be combined on an as-needed basis.

Embodiment 1

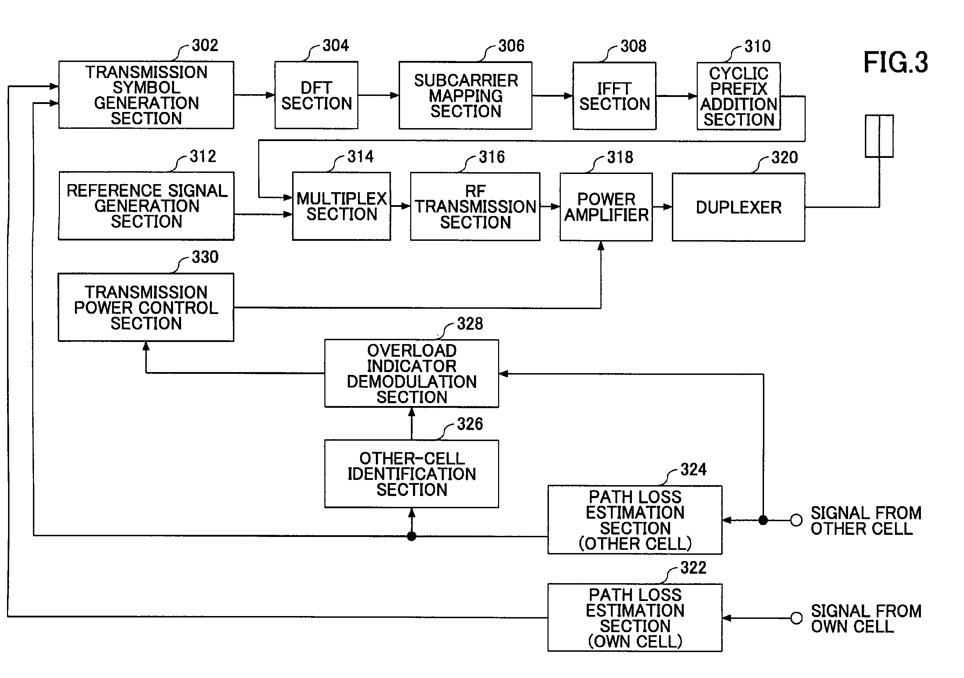

FIG. 3 shows exemplary functional blocks of the user equipment according to an embodiment of the present invention. The user equipment is assumed to be used in a mobile communication system employing the single carrier method for uplink transmission. As shown in FIG. 3, the user equipment includes a transmission symbol generation section 302, a DFT (Discrete Fourier Transform) section 304, a subcarrier mapping section 306, an IFFT (Inverse Fast Fourier Transform) section 308, a cyclic prefix addition (+CP) section 310, a reference signal generation section 312, a multiplex section 314, an RF transmission circuit 316, a power amplifier 318, a duplexer 320, path loss estimation sections 322 and 324, an other-cell identification section 326, an overload indicator demodulation section 328, and a transmission power control section 330.

The transmission symbol generation section 302 provides (generates) a signal transmitted in the uplink direction. Further, the transmission symbol generation section 302 generates not only a user traffic data signal that the user intends to transmit but also a control signal. The control signal may include a path loss value in the own cell (own-cell path loss value) as well as information items such as a transmission format of an uplink data signal (modulation method, data size and the like), uplink transmission power value, transmission acknowledge information (ACK/NACK) for a downlink data signal, the receiving quality of a downlink signal (e.g., CQI value) and the like. The control signal may further include a path loss value of another cell (other-cell path loss value).

The DFT section 304 performs the DFT, converting from time-domain data into frequency-domain data.

[ The subcarrier mapping section 306 performs a mapping to a frequency domain. In this case, the FDM (Frequency Division Multiplexing) method may be used for multiplexing data of multiple users (user equipment). The FDM method includes two types of methods: one is a localized FDM method and the other is a distributed FDM method.

The IFFT section 308 performs the inverse FFT, restoring a time-domain signal from a frequency-domain signal.

The cyclic prefix addition (+CP) section 310 adds a cyclic prefix (CP) to the data to be transmitted. The added CP serves as a guard interval for absorbing a multipath propagation delay and a reception timing difference between multiples users at the base station.

The reference signal generation section 312 provides (generates) a reference signal to be transmitted in the uplink direction. The reference signal may be referred to as a pilot signal, a training signal and the like.

The multiplex section 314 multiplexes data to be transmitted and generates transmission symbols.

The RF transmission circuit 316 performs a digital-to-analog conversion, a frequency conversion, band limiting and the like to transmit the transmission symbols on a radio frequency.

The power amplifier 318 adjusts the transmission power value.

The duplexer 320 adequately switches between a transmission signal and a received signal to perform simultaneous communications.

The path loss estimation sections 322 estimates a path loss value based on a reference signal received from the base station of the own cell. For explanation purposes, the term the "own cell" refers to a cell to which the user equipment is connected, and the own cell may be referred to as a connecting cell or a serving cell. A path loss value L is derived (calculated) based on a difference between the transmission power value (quality) and the received power value (quality) and obtained as an average value by receiving the reference signal for a certain period of time. The path loss value L may largely change depending on distance fluctuation, shadowing and the like and has a characteristic that average path loss in the uplink direction does not greatly differ from that in the downlink direction. Further, the path loss L does not depend on the instantaneous fading. Generally, the path loss L satisfies the following formula:

$$SIR_t = P_{TX} + L - I_0$$

where the symbol $SIR_t$ denotes the target quality value, the symbol $P_{TX}$ denotes the transmission power value, and the symbol $I_0$ denotes the interference power value.

The path loss estimation sections 324 estimates a path loss value based on a reference signal received from the base station of another cell. For explanation purposes, the term the "other cell" refers to a cell to which the user equipment is not connected and other cells may be referred to as non-connecting cells or non-serving cells.

The other-cell identification section 326 identifies other cells surrounding the serving cell of the user equipment.

The overload indicator demodulation section 328 demodulates the overload indicator received from another cell and outputs the result of the demodulation.

The transmission power control section 330 controls the transmission power value of the transmission signal based on an instruction from the base station of the own cell. In this case, when necessary, the transmission power value is reduced in response to the overload indicator received from the other cell. In this first embodiment of the present invention, a decision whether the transmission power value is controlled to be reduced in response to the overload indicator is made by the base station of the own cell. On the other hand, in second and third embodiments of the present invention, the decision is made by the user equipment autonomously.

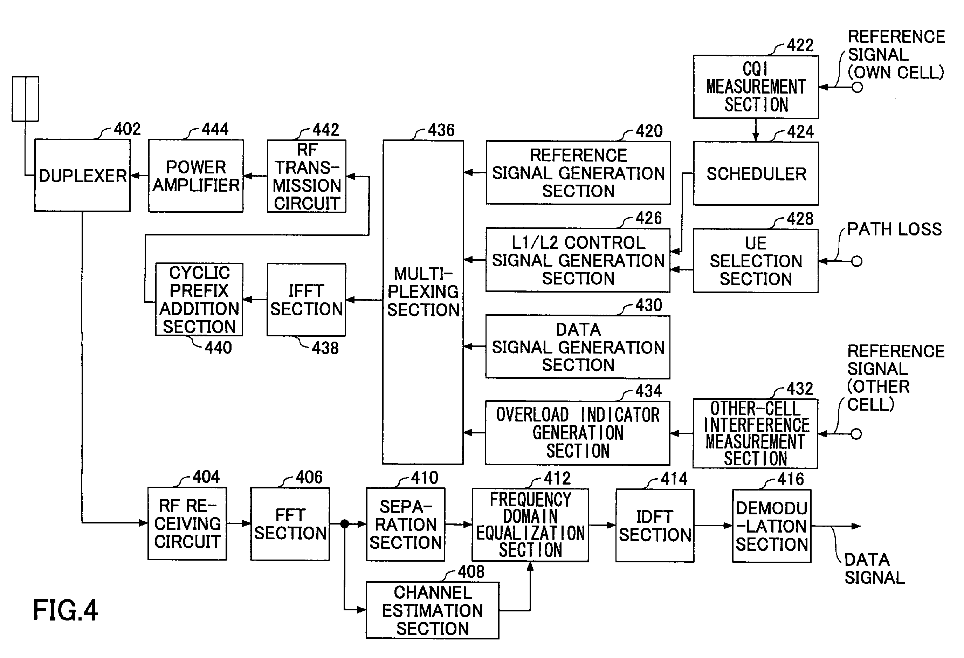

FIG. 4 shows exemplary functional blocks of the base station according to an embodiment of the present invention. As shown in FIG. 4, the base station includes a duplexer 402, an RF receiving circuit 404, an FFT (Fast Fourier Transform) section 406, a channel estimation section 408, a separation section 410, a frequency domain equalization section 412, an IDFT (Inverse Discrete Fourier Transformation) section 414, a demodulation section 416, a reference signal generation section 420, a CQI measurement section 422, a scheduler 424, an L1/L2 control signal generation section 426, a UE selection section 428, a data signal generation section 430, an other-cell interference measurement section 432, an overload indicator generation section 434, a multiplex section 436, an IFFT section 438, a cyclic prefix addition section 440, an RF transmission circuit 442, and a power amplifier 444.

The duplexer 402 adequately switches between a transmission signal and a received signal to perform simultaneous communications.

The RF receiving circuit 404 performs a digital-to-analog conversion, a frequency conversion, band limiting and the like to process the received symbols in a baseband.

The FFT section 406 performs fast Fourier transform, converting from time-domain data to frequency-domain data.

The channel estimation section 408 estimates uplink channel quality based on a receiving quality of an uplink reference signal and outputs data for channel compensation.

The separation section 410 performs a demapping process on a frequency domain. This process corresponds to the mapping process on a frequency domain performed by each user equipment terminal.

The frequency domain equalization section 412 equalizes the received signal based on the channel estimation value.

The IDFT section 414 performs an inverse FFT, converting from a frequency-domain signal into a time-domain signal.

The demodulation section 416 demodulates the received signal. According to an embodiment of the present invention, the uplink control signal as well as the uplink data signal are demodulated so that the own-cell path loss value $L_S$ and when necessary the other-cell path loss value $L_{NS}$ as well are obtained.

The reference signal generation section 420 provides (generates) a reference signal to be transmitted in the downlink direction.

The CQI measurement section 422 estimates (measures) the channel quality (CQI) between the base station and each of user equipment terminals based on the reference signal for quality measurement received from each of the user equipment terminals. This reference signal for quality measurement is transmitted using a wider bandwidth than is used for the reference signal to be received by the channel estimation section 408, and is received by the base station. This is because the reference signal for channel estimation is only required to be transmitted across the bandwidth where the resource blocks are actually allocated, but the reference signal for quality measurement on which the scheduling is based is required to be transmitted across the entire bandwidth where all resource blocks may be allocated.

The scheduler 424 determines the allocation of uplink and downlink resources based on the channel quality value (CQI) and other criteria. The determined content is output as scheduling information. Typically, the scheduling information specifies a frequency, time, and transmission format (such as data modulation method and channel coding rate) to be used for signal transmission and the like.

The L1/L2 control signal generation section 426 generates an L1/L2 control signal. According to this embodiment of the present invention, the L1/L2 control signal may include an instruction signal indicating whether destination user equipment should reduce the transmission power value in response to the overload indicator as well as the above scheduling information.

The UE selection section 428 determines which user equipment should reduce the transmission power value in response to the overload indication based on the path loss value reported from the user equipment and generates an instruction signal indicating the determined content. As described below, this decision may be made based on whether the path loss value satisfies a predetermined condition. The generated instruction signal may be included in the L1/L2 control signal.

The data signal generation section 430 provides (generates) a data signal.

The other-cell interference measurement section 432 measures other-cell interference caused by the user equipment in another cell and outputs a signal indicating whether the other-cell interference exceeds a predetermined value.

The overload indicator generation section 434 provides (generates) the overload indicator based on the measurement result of the other-cell interference and incorporates the overload indicator into a transmission signal.

The multiplex section 436 multiplexes the reference signal, the L1/L2 control signal, and the data signal so as to be transmitted to the user equipment in the own cell. The multiplex section 436 further multiplexes the overload indicator in the transmission signal so that the user equipment in a cell other than the own cell receives the overload indicator.

The IFFT section 438 performs fast Fourier transform and OFDM modulation on the mapped signal and generates a part of effective symbols in the transmission symbols.

The cyclic prefix addition section (+CP) 440 adds a guard interval to the OFDM modulated signal (effective symbols part at this point) to generate OFDM symbols constituting the transmission signal. The transmission signal is transmitted by a unit (not shown). The cyclic prefix (CP) is called a guard interval and provided (generated) by duplicating a part of effective symbols in the transmission symbols.

The RF transmission circuit 442 performs a digital-to-analog conversion, a frequency conversion, band limiting and the like to transmit the transmission symbols on a radio frequency.

The power amplifier 444 adjusts the transmission power.

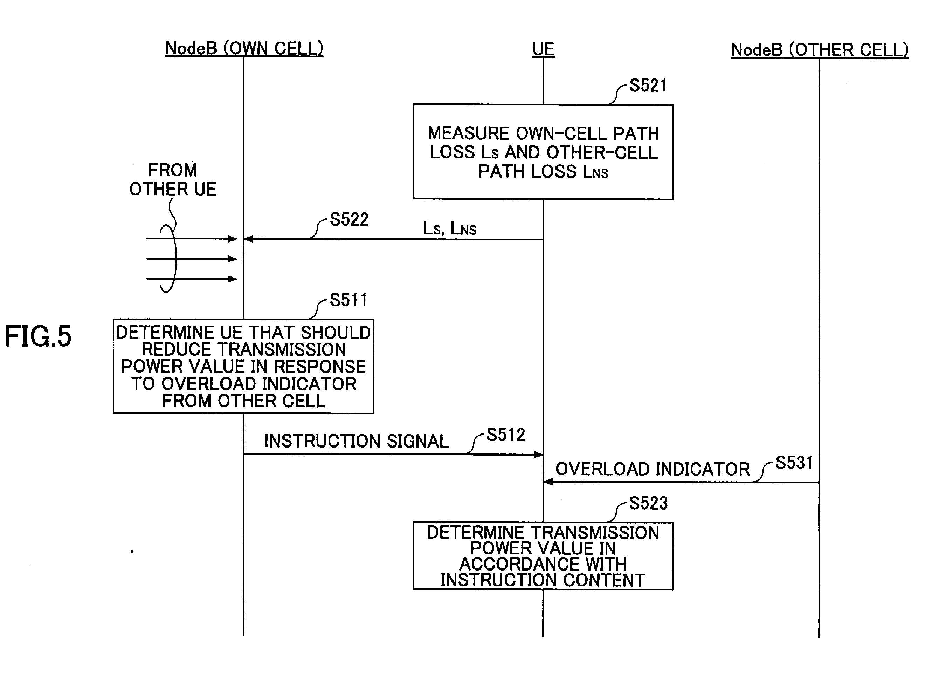

FIG. 5 is a sequence diagram showing operations according to a first embodiment of the present invention. In step S521, the user equipment (UE) measures a path loss value $L_S$ of the own cell and a path loss value $L_{NS}$ of the other cells. Herein, the path loss value $L_S$ of the own cell (hereinafter may be referred to as own-cell path loss value $L_S$) is obtained by calculating a difference value between an average power value of the received reference signal transmitted from the base station in connection with the user equipment (i.e., the base station of the serving cell) and the transmission (target) pow-er val-

ue of the reference signal. On the other hand, the path loss value $L_{NS}$ of the other cells (hereinafter may be referred to as other-cell path loss value $L_{NS}$) is obtained by calculating a difference value between an average power value of the received reference signal transmitted from the base station not in connection with the user equipment (i.e., the base station of the non-serving cell) and the transmission (target) power value of the reference signal. More specifically, an antenna gain value and the like are used (considered) upon the calculations of the own-cell path loss value $L_S$ and the other-cell path loss value $L_{NS}$.

In step S522, a signal (typically the L1/L2 control signal) including the own-cell path loss value $L_S$ and the other-cell path loss value $L_{NS}$ is transmitted to the base station which is in connection with the user equipment to report the own-cell path loss value $L_S$ and the other-cell path loss value $L_{NS}$ to the base station of the own cell.

In step S511, the base station of the own cell determines whether the path loss value reported from each user equipment terminal satisfies a predetermined condition. Depending on the determination result, the base station selects (determines) the user equipment terminals that should reduce their transmission power values in response to the request of the overload indicator transmitted from another cell. In this case, any adequate condition may be used as the predetermined condition. In the following, a case of using only the own-cell path loss value $L_S$ and a case of using both the own-cell path loss value $L_S$ and the other-cell path loss value $L_{NS}$ are separately described.

(1) Case of using only the own-cell path loss value $L_S$

For example, in a case where the own-cell path loss value $L_S$ is greater than a predetermined threshold value, the transmission power value of a signal from the user equipment is required to be increased by just that much, which may result in the increase of the interference to the other cells. When such user equipment receives the overload indicator (request) from the other cell, it may be better for the user equipment to respond to the request to reduce the transmission power value of the signal from the user equipment. On the other hand, in a case where the own-cell path loss value $L_S$ is not greater than a predetermined threshold value, it is not necessary to transmit a signal using relatively higher transmission power, which may result in the interference to the other cells becoming relatively small. When such user equipment receives the overload indicator (request) from the other cell, it may be better for the user equipment not to respond to the request to reduce the transmission power value of the signal. As described above, it may be possible to select (determine) the user equipment that should respond to the request using the overload indicator from the other cell by comparing the own-cell path loss value $L_S$ with the predetermined threshold value. Further, it may be more preferable to rank all the selected user equipment terminals in descending order of the own-cell path loss value $L_S$ and finally select the top predetermined number of user equipment terminals to respond to the request.

(2) Case of using both the own-cell path loss value $L_S$ and the other-cell path loss value $L_{NS}$

In a case where the other-cell path loss value $L_{NS}$ is relatively large, when the user equipment transmits a signal, the signal may be greatly attenuated before arriving at the base station of the other cells. Therefore, the interference to the other cells may be relatively small. On the other hand, in a case where the other-cell path loss value $L_{NS}$ is relatively small, when the user equipment transmits a signal, the signal may be transmitted to the base station of the other cells without being attenuated so much. Therefore, the interference to the other cells may become relatively large. Further, in a case where the own-cell path loss value $L_S$ and the other-cell path loss value $L_{NS}$ are in the same level, when the user equipment transmits a signal to the base station of the own cell, the signal may be transmitted to the base station of the other cells at the same level as at the base station of the own cell. Therefore, the signal may become a strong interference source to the base station of the other cells. Therefore, when the other-cell path loss value $L_{NS}$ is relatively small and the own-cell path loss value $L_S$ is relatively large and when the own-cell path loss value $L_S$ and the other-cell path loss value $L_{NS}$ are in the same level, it may be better for the user equipment to respond to the request to reduce the transmission power value of the signal from the user equipment. Otherwise, it may not necessary for the user equipment to respond to the request to reduce the transmission power value of the signal from the user equipment. The above conditions may be described in another way: i.e., when a difference value of the path loss values ($L_{NS} - L_S$) is nearly zero (0) or a negative value, it may be better for the user equipment to respond to the request (overload indicator), otherwise it is not necessary for the user equipment to respond to the request.

In any case, the base station of the own cell selects (determines) the user equipment that should respond to the request (overload indicator) from the other cell based on whether the own-cell path loss value $L_S$ and/or the other-cell path loss value $L_{NS}$ reported from each user equipment terminal satisfies the corresponding predetermined condition.

In step S512, the information (instruction signal) indicating which user equipment is selected in step S511 is reported to the user equipment (UE). This report may be only reported to the user equipment selected in step S511 using an individual control signal or may be concurrently broadcasted to each user equipment terminal regardless of which user equipment is being selected.

In step S531, for example, at the timing when the user equipment receives the overload indicator from the other cell, the user equipment already knows whether the user equipment should respond to the overload indicator (request) by having demodulated the instruction signal received in step S512.

In step S523, the user equipment determines the transmission power value of the transmission signal from the user equipment based on the content of the instruction signal. More specifically, in a case where it is not necessary to respond to the overload indicator (request), the user equipment transmits the signal at the same transmission power value as is specified by the base station (own cell). On the other hand, in a case where it is necessary to respond to the overload indicator (request), the user equipment transmits the signal at the transmission power level which is less than the transmission power value by a predetermined value ($\Delta_{offset}$), the transmission power value being specified by the base station (own cell).

As described above, according to this embodiment of the present invention, it may become possible that only the user equipment that is really required to respond to the overload indicator (request) reduces the transmission power value according to the request without necessarily reducing the transmission power value of the other user equipment. Therefore, it may become possible to avoid excessive reduction of the transmission power and tend to equalize the other-cell interference from the user equipment in another cell.

Embodiment 2

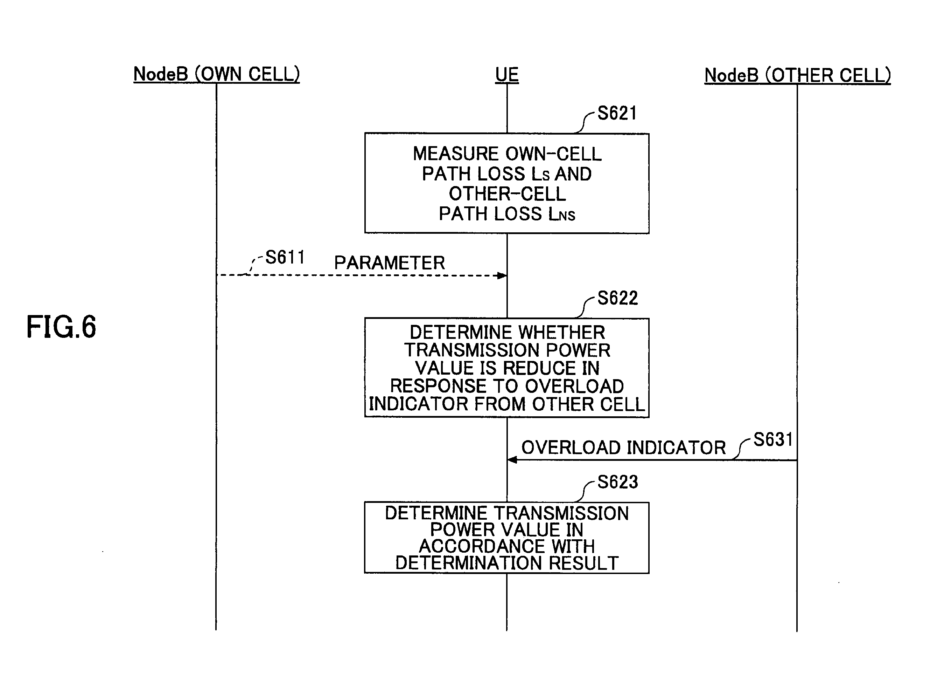

FIG. 6 is a sequence diagram showing operations according to a second embodiment of the present invention. In step S621, the user equipment (UE) measures the own-cell path loss value $L_S$ and the other-cell path loss value $L_{NS}$.

In step S622, the user equipment determines whether the user equipment should respond to the request to reduce the transmission power value based on whether the own-cell path loss value $L_S$ or the own-cell path loss value $L_S$ and the other-cell path loss value $L_{NS}$ satisfy the corresponding predetermined conditions. Basically, the process regarding the prescribed conditions in step S622 may be similar to that in step S511 in FIG. 5 described above.

In step S631, at the timing when, for example, the user equipment receives the overload indicator from the other cell, the user equipment has already determined in step S622 whether the user equipment should respond to the overload indicator (request).

In the S623, based on the result determined in step S622, the user equipment determines the transmission power value of the transmission signal. More specifically, in a case where it is not necessary to respond to the overload indicator (request), the user equipment transmits the signal at the same transmission power value as is specified by the base station (own cell). On the other hand, in a case where it is necessary to respond to the overload indicator (request), the user equipment transmits the signal at the transmission power level which is less than the transmission power value by a predetermined value ($\Delta_{offset}$), the transmission power value being specified by the base station (own cell).

Embodiment 3

In a third embodiment of the present invention, similar to the second embodiment described above, it is user equipment that makes the determination whether the user equipment should respond to the request from an other cell to reduce the transmission power value. However, as shown in the dotted line in step S611 of FIG. 6, the parameter data specifying the conditional formula to be used for the determination are transmitted from the base station. For example, a specific threshold value to be used for the conditional formula may be transmitted from the base station.

As described above, the present invention is described herein in separate embodiments. However, such separation of the embodiments is not essential to the present invention, and one or embodiments may be used if needed. For example, some user equipment terminals may be controlled based on the first embodiment of the present invention and some other user equipment terminals may be controlled based on the second or third embodiment of the present invention. However, as described in the first embodiment of the present invention, the base station may be entitled to perform various determinations. By being configured in this way, it may be advantageous because the base station becomes capable of comparing the communication status among multiple user equipment terminals and as a result it may become possible to select (determine) the user equipment terminal that has relatively more influence on the other-cell interference. Further, the first embodiment may be advantageous because, from the viewpoint of equalizing the other-cell interference, by observing the path loss values reported from each user equipment terminal, it may become possible to select (limit) the user equipment terminals that should reduce the transmission power value with higher priority. On the other hand, as described in the second and third embodiments of the present invention, it is not the base station but the user equipment that autonomously determines whether the user equipment should respond to the request to reduce the transmission power value. Because of this feature, it may be not be necessary to increase the burden of a controlling process of the base station.

The present invention is described above by referring to specific embodiments. However, a person skilled in the art may understand that the above embodiments are described for illustrative purpose only and may think of examples of various modifications, transformations, alterations, changes, and the like. To promote an understanding of the present invention, the specific values are used as examples throughout the description. However, it should be noted that such specific values are just sample values unless otherwise described, and any other values may be used. For illustrative purposes, the apparatus according to an embodiment of the present invention is described with reference to the functional block diagram. However, such an apparatus may be provided by hardware, software, or a combination thereof. The present invention is not limited to the embodiment described above, and various modifications, transformations, alteration, exchanges, and the like may be made without departing from the scope and spirit from the present invention.

The present international application claims priority from Japanese Patent Application No. 2007-001856 filed on January 9, 2007, the entire contents of which are hereby incorporated herein by reference.

**Claims**

1. A base station apparatus capable of communicating with user equipment used in a mobile communication system, the base station apparatus comprising:

   a determination unit configured to determine whether a path loss value reported from the user equipment satisfies a predetermined condition; an instruction signal generation unit configured to, based on a result of the determination made by the determination unit, generate an instruction signal indicating whether the user equipment should reduce a transmission power value in response to a request from another cell to reduce the transmission power value; and a transmission unit configured to transmit the instruction signal to the user equipment, wherein the path loss value is derived based on an average receiving quality value and a target quality value.

2. The base station apparatus according to claim 1, wherein
   the determination unit determines whether a difference value between an own-cell path loss value and an other-cell path loss value satisfies a predetermined condition, the own-cell path loss value being obtained between the user equipment and the base station apparatus, the other-cell path loss value being obtained between the user equipment and a base station apparatus of the other cell.

3. A method used in a base station apparatus capable of communicating with user equipment used in a mobile communication system, the method comprising:

   a determination step of determining whether a path loss value reported from the user equipment satisfies a predetermined condition;
an instruction signal generation step of, based on a result of the determination made in the determination step, generating an instruction signal indicating whether the user equipment should reduce a transmission power value in response to a request from another cell to reduce the transmission power value; and
a transmission step of transmitting the instruction signal to the user equipment, wherein
the path loss value is derived based on an average receiving quality value and a target quality value.

4. User equipment capable of communicating with a base station apparatus used in a mobile communication system, the user equipment comprising:

a path loss value transmission unit configured to measures a path loss value at least between the base station apparatus and the user equipment and transmit the measured path loss value to the base station apparatus;
an instruction signal receive unit configured to receive an instruction signal indicating whether the user equipment should reduce a transmission power value in response to a request from another cell to reduce the transmission power value depending on whether the path loss value satisfies a predetermined condition; and
a transmission power value adjustment unit configured to adjust the transmission power value based on the instruction signal, wherein
the path loss value is derived based on an average receiving quality value and a target quality value.

5. The user equipment according to claim 4, wherein an own-cell path loss value and an other-cell path loss value are transmitted to the base station apparatus, the own-cell path loss value being obtained between the user equipment and the base station apparatus, the other-cell path loss value being obtained between the user equipment and a base station apparatus of the other cell, and
the instruction signal is received from the base station apparatus, the instruction signal being generated depending on whether a difference value between the own-cell path loss value and the other-cell path loss value satisfies a predetermined condition.

6. A method used in user equipment capable of communicating with a base station apparatus used in a mobile communication system, the method comprising:

a path loss value transmission step of measuring a path loss value at least between the base station apparatus and the user equipment and transmitting the measured path loss value to the base station apparatus;
an instruction signal receive step of receiving an instruction signal indicating whether the user equipment should reduce a transmission power value in response to a request from another cell to reduce the transmission power value depending on whether the path loss value satisfies a predetermined condition; and
a transmission power value adjustment step of adjusting the transmission power value based on the instruction signal, wherein
the path loss value is derived based on an average receiving quality value and a target quality value.

7. User equipment capable of communicating with a base station apparatus used in a mobile communication system, the user equipment comprising:

a path loss value transmission unit configured to measure a path loss value at least between the base station apparatus and the user equipment and transmit the measured path loss value to the base station apparatus;
a determination unit configured to determine whether the user equipment should reduce a transmission power value in response to a request from another cell to reduce the transmission power value depending on whether the path loss value satisfies a predetermined condition; and
a transmission unit configured to determine the transmission power value in accordance with the determination made by the determination unit and transmit a transmission signal to the base station apparatus, wherein
the path loss value is derived based on an average receiving quality value and a target quality value.

8. The user equipment according to claim 7, wherein the determination unit determines depending on whether a difference value between an own-cell path loss value and an other-cell path loss value satisfies a predetermined condition, the own-cell path loss value being obtained between the user equipment and the base station apparatus, and the other-cell path loss value being obtained between the user equipment and a base station apparatus of the other cell.

9. The user equipment according to claim 7, wherein a parameter value specifying the predetermined condition is reported from the base station apparatus.

**EP 2 104 247 A1**

**10.** A method used in user equipment capable of communicating with a base station apparatus used in a mobile communication system, the method comprising:

a path loss value transmission step of measuring a path loss value at least between the base station apparatus and the user equipment and transmitting the measured path loss value to the base station apparatus;

a determination step of determining whether the user equipment should reduce a transmission power value in response to a request from another cell to reduce the transmission power value depending on whether the path loss value satisfies a predetermined condition; and

a transmission step of determining the transmission power value in accordance with the determination made in the determination step and transmitting a transmission signal to the base station apparatus, wherein

the path loss value is derived based on an average receiving quality value and a target quality value.

# FIG.1

FIG.2

FIG.3

REFERENCE SIGNAL (OWN CELL)

PATH LOSS

REFERENCE SIGNAL (OTHER CELL)

DATA SIGNAL

422 CQI MEASUREMENT SECTION

424 SCHEDULER

428 UE SELECTION SECTION

432 OTHER-CELL INTERFERENCE MEASUREMENT SECTION

416 DEMODU-LATION SECTION

420 REFERENCE SIGNAL GENERATION SECTION

426 L1/L2 CONTROL SIGNAL GENERATION SECTION

430 DATA SIGNAL GENERATION SECTION

434 OVERLOAD INDICATOR GENERATION SECTION

414 IDFT SECTION

412 FREQUENCY DOMAIN EQUALIZATION SECTION

408 CHANNEL ESTIMATION SECTION

436 MULTI-PLEXING SECTION

410 SEPA-RATION SECTION

442 RF TRANS-MISSION CIRCUIT

438 IFFT SECTION

406 FFT SECTION

444 POWER AMPLIFIER

440 CYCLIC PREFIX ADDITION SECTION

404 RF RE-CEIVING CIRCUIT

402 DUPLEXER

FIG.4

**FIG.5**

NodeB (OWN CELL)                    UE                    NodeB (OTHER CELL)

┌─ S521 ─────────────────────┐
│ MEASURE OWN-CELL PATH       │
│ LOSS $L_s$ AND OTHER-CELL   │
│ PATH LOSS $L_{NS}$          │
└─────────────────────────────┘

FROM
OTHER UE

S522      $L_s$, $L_{NS}$

┌─ S511 ──────────────────────┐
│ DETERMINE UE THAT SHOULD     │
│ REDUCE TRANSMISSION          │
│ POWER VALUE IN RESPONSE      │
│ TO OVERLOAD INDICATOR        │
│ FROM OTHER CELL              │
└──────────────────────────────┘

INSTRUCTION SIGNAL       S512

OVERLOAD INDICATOR    S531

┌─ S523 ──────────────────────┐
│ DETERMINE TRANSMISSION       │
│ POWER VALUE IN               │
│ ACCORDANCE WITH              │
│ INSTRUCTION CONTENT          │
└──────────────────────────────┘

**FIG.6**

NodeB (OWN CELL)       UE       NodeB (OTHER CELL)

S621

MEASURE OWN-CELL
PATH LOSS $L_S$ AND
OTHER-CELL
PATH LOSS $L_{NS}$

S611 PARAMETER

S622

DETERMINE WHETHER
TRANSMISSION POWER
VALUE IS REDUCE IN
RESPONSE TO OVERLOAD
INDICATOR FROM OTHER CELL

OVERLOAD INDICATOR S631

S623

DETERMINE TRANSMISSION
POWER VALUE IN
ACCORDANCE WITH
DETERMINATION RESULT

EP 2 104 247 A1

## INTERNATIONAL SEARCH REPORT

| International application No. |
|---|
| PCT/JP2007/074958 |

A. CLASSIFICATION OF SUBJECT MATTER
*H04B7/26*(2006.01)i, *H04J11/00*(2006.01)i

According to International Patent Classification (IPC) or to both national classification and IPC

B. FIELDS SEARCHED

Minimum documentation searched (classification system followed by classification symbols)
H04B7/24-7/26, H04Q7/00-7/38, H04J11/00

Documentation searched other than minimum documentation to the extent that such documents are included in the fields searched
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | Lucent Technologies, Uplink Scheduling With Inter-Cell Power Control, with Extensions to Interference Coordination, 3GPP TSG-RAN WG1 #47, R1-063478, 3GPP, 2006.10, p.1-7 | 1-10 |
| A | JP 2004-207840 A (NEC Corp.), 22 July, 2004 (22.07.04), Full text; all drawings & US 2004/0127259 A1 & EP 1434364 A2 & CN 1510948 A | 1-10 |

| ☐ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 11 April, 2008 (11.04.08) | 22 April, 2008 (22.04.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**EP 2 104 247 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007001856 A